# EUROPÄISCHE PATENTSCHRIFT

(11) **EP 2 281 009 B1**
(45) Veröffentlichungstag und Bekanntmachung des Hinweises auf die Patenterteilung: **19.09.2012**
(21) Anmeldenummer: 09749629.3
(22) Anmeldetag: 20.05.2009
(51) Int. Cl.: C08G 63/06, B01J 19/20

(54) **VERFAHREN ZUR HERSTELLUNG VON POLYMILCHSÄURE**
PROCESS FOR PREPARING POLY LACTIC ACID
PROCÉDÉ DE FABRICATION D' ACIDE POLYLACTIQUE

(30) Priorität: 22.05.2008 DE 102008024721; 20.06.2008 CH 948082008
(43) Veröffentlichungstag der Anmeldung: 09.02.2011
(73) Patentinhaber: LIST Holding AG, 4422 Arisdorf (CH)
(72) Erfinder: STÜTZLE, Bernhard, F-68400 Riedisheim (FR); FLEURY, Pierre-Alain, CH-4433 Ramlinsburg (CH)
(74) Vertreter: Weiss, Peter
(86) Internationale Anmeldenummer: PCT/EP2009/003608
(87) Internationale Veröffentlichungsnummer: WO 2009/141139

(56) Entgegenhaltungen:
- EP-A2- 1 247 808
- WO-A1-2006/034875
- WO-A1-2007/112901
- US-A- 5 798 435

## Beschreibung

Die Erfindung betrifft ein Verfahren zur Herstellung von Polymilchsäure. Die Erfindung betrifft auch zweistufige Verfahren, die Polymerisationsprozesse mit einer nachgeschalteten Entgasungs-/Demonomerisierungs-/Devolatilisierungsstufe kombinieren.

### STAND DER TECHNIK

Ein beträchtlicher Teil von Polymerisationsreaktionen insbesondere zur Herstellung von homo- und co-polymeren Biopolymeren, wie zum Beispiel PLA (Polylacticacid), PHB (Polyhydroxybutyrate), PHA (Polyhydroxyalkanoate), Polydextrose, Bio-PET, Stärke, Cellulose, Kitine und Proteine werden kommerziell als "Slurry or Solution Process" in einem oder mehreren hintereinandergeschalteten kontinuierlich betriebenen, rückgemischten vertikalen Rührkesselreaktoren sog. "CSTR" (= continuous stirred tank reactors) durchgeführt.

Diese Rührkesselreaktoren haben die Aufgabe, die Monomere, die Katalysatoren und Initiatoren in einem Lösemittel/Verdünnungsmittel bei genau definierten Prozessbedingungen, wie Temperatur und Druck, möglichst homogen zu verteilen, damit die Reaktion kontrolliert abläuft, eine gleichmässige Produktqualität mit der gewünschten Molmasse entsteht und ausserdem die Reaktionswärme beherrscht wird.

Die Problematik dieser Rührkesselreaktoren besteht nun darin, dass nur Produkte mit einer niedrigen scheinbaren Viskosität oder Schmelzviskosität verarbeitet werden können.

Bei steigender Konzentration des Polymers im Lösemittel/Verdünnungsmittel steigt die scheinbare Viskosität der Reaktionsmasse derart an, dass der Rührer schliesslich keine ausreichende konvektive Strömung erzeugen kann. Die Folge davon ist eine inhomogene Verteilung der Monomere. Dies führt zu Klumpenbildung, schlechter Molmassenverteilung, Anbackungen, örtlichen Überhitzungen bis hin zum unkontrollierbaren Reaktionsablauf des ganzen Reaktorinhalts.

Ein weiteres Problem von Rührkesselreaktoren ist bei einzelnen Produkten die Schaumbildung oder ein starkes Aufblähen der Produktmasse, welche an den Domabzügen zu Verstopfungen und Verschlüssen führen kann.

Die oben genannten Prozessgefahren führen dazu, dass Rührkesselreaktoren mit einem grossen Überschuss an LösemittelNerdünnungsmittel bis zu ca. 90% der Reaktionsmasse betrieben oder bei Bulkpolymerisationen wegen hoher Viskositäten nur limitierte Umsätze, oft nur von weniger als 50%, erzielt werden können. Als Folge davon werden zusätzliche Verfahrensschritte zur mechanischen/thermischen Abtrennung des Verdünnungsmittels bzw. des Lösemittels/Monomers resp. zur Nachreaktion (Erhöhung der chemischen Umsatzrate) notwendig.

Dies geschieht in der Regel in Entwässerungsschnecken, Eindampf- und Trocknungsanlagen sowie Reifetanks. Sie bedeuten hohe Investitions-, Energie- und Betriebskosten. Es gibt auch neue Polymere, die nicht mit "Water Stripping Process" verarbeitbar sind!

Bulkpolymerisationen oder Copolymerisationen werden auch in ein- oder mehrwelligen Extrudern (z.B. von Werner Pfleiderer, Buss-Kneter, Welding Engineers, etc.) kontinuierlich durchgeführt. Diese Apparate sind für Polymerisationen in der viskosen Phase bis zu hohen Umsätzen konzipiert. Sie sind als kontinuierliche Pfropfenströmungsreaktoren konstruiert und haben dementsprechend ein grosses UD-Verhältnis von > 5 bis ca. 40.

Hier treten folgende Probleme auf:
a) Bei langsamen Polymerreaktioneri mit Reaktionszeiten > 5 Minuten, bei welchen die Reaktionsmasse lange im flüssigen Zustand bleibt, lässt sich die Pfropfenströmung nicht aufrechterhalten. Die stark unterschiedlichen rheologischen Eigenschaften zwischen den Monomeren und Polymeren verhindern einen gleichmässigen Produkttransport, was zu unerwünschten Qualitätsschwankungen führt.
b) Die starke Exothermie vieler Polymerisationsprozesse sowie die mechanisch dissipierte Knetenergie machen es häufig erforderlich, diese Energien wirksam und effizient über eine Verdampfungskühlung abzuführen. Dabei wird ein Teil des Monomers oder des beigemischten Lösemittels/Verdünnungsmittels verdampft, in einem externen Kondensator kondensiert und das Kondensat in den Reaktor rückgeführt. Aufgrund des grossen UD Verhältnisses und des konstruktiv bedingten grossen Schneckenquerschnitts stehen für den Abzug von Dämpfen nur sehr beschränkte freie Querschnittsflächen zur Verfügung. Dies führt zum unerwünschten Mitreissen von Polymeren in die Domabzüge, die Brüdenleitungen oder/und in den Rückflusskondensator und als Folge davon zu Verstopfungen/Verschlüssen.
c) Bei der Herstellung von (Co-) Polymeren aus mehreren unterschiedlichen Monomeren kommt erschwerend hinzu, dass für die Verdampfungskühlung hauptsächlich das Monomer mit dem niedrigsten Siedepunkt verdampft, so dass sich im Reaktor eine Verschiebung der Monomerkonzentrationen einstellt, insbesondere im Bereich der Eintrittsöffnung des Kondensatrückflusses. Dies ist in der Regel unerwünscht.
d) Nachteilig ist ausserdem, dass das freie Produktvolumen von Schnecken aus mechanisch konstruktiven Gründen auf etwa 1,5 m3 beschränkt ist, so dass bei Reaktionen mit Verweilzeiten >5 Minuten nur niedrige Durchsätze erzielt werden können, was wiederum die Installation von mehreren parallelen Linien mit entsprechend hohen Investitions- und Betriebskosten erfordert.

Eine weitere Möglichkeit zur Durchführung von Bulkpolymerisationen bis zu hohen Umsätzen wird in der US 5,372,418 beschrieben. Hier werden gleich- oder gegenläufige Mehrschneckenextruder mit nicht-kämmenden, in gegensätzlicher Richtung fördernden Schnecken oder Schneckenpaaren zur Polymerisation der Monomere durch Rückvermischung mit dem Polymer in der viskosen Phase beschrieben. Diese Apparate sind grundsätzlich in der Lage, Polymerisationsprozesse bis zu hohen Umsätzen durchzuführen und gleichzeitig die vorher beschriebenen Nachteile a) (Zusammenbruch der Pfropfenströmung) und c) (Rezepturverschiebung durch Rückfluss) vom Pfropfenströmungsextruder zu vermeiden. Ungelöst bleiben aber nach wie vor die vorher beschriebenen Probleme b) (reduzierter freier Querschnitt) und d) (Baugrösse). Og. Verfahren werden auch in sogenannten Mischknetern durchgeführt, in denen das Produkt durch entsprechende Knet- und Transportelemente von einem Einlass zu einem Auslass transportiert und gleichzeitig mit den Wärmeaustauschflächen in intensiven Kontakt gebracht wird. Derartige Mischkneter sind beispielsweise in der DE-PS 23 49 106, der EP 0 517 068 A1 und der DE 195 36 944 A1 beschrieben.

### AUFGABE

Aufgabe der vorliegenden Erfindung ist es, das o.g. Verfahren in konzentrierter, höherviskoser Phase durchzuführen und dahingehend zu optimieren und vor allem auch die Prozessschritte zu beschleunigen und die Produktqualität zu erhöhen bzw. die Produktpalette zu erweitern.

### LÖSUNG DER AUFGABE

Zur Lösung der Aufgabe führen die Merkmale von Anspruch 1. Das Produkt wird im Mischkneter bis zu einer bestimmten Verarbeitungstemperatur erhitzt, bei der unter dem herrschenden kontrollierten Betriebsdruck (Überdruck, Atmosphäre oder Vakuum) Teile des Produktes verdampfen und damit die Exothermie der Reaktionsmasse als auch die in die viskose Reaktionsmasse dissipierte Knetenergie wirksam und effizient durch Verdampfungskühlung absorbiert werden. Die Betriebsbedingungen (Heiztemperatur, Betriebsdruck, Mischkneter-Füllgrad ode, Kneterwellendrehzahl.) werden so gewählt, dass, wenn immer möglich, eine quasi ausgeglichene Energiebilanz erzielt wird, die dann eine vorteilhafte Extrapolation des Verfahrens einzig und allein auf der für die Prozessdurchführung erforderlichen Verweilzeit erlaubt. Das (Die) verdampfte(n) Produkt(e) wird (werden) kondensiert und gezielt in die Reaktionsmasse rückgeführt (Rückflusskondensation).

Da die benetzte Produktoberfläche wesentlich grösser ist als die apparative Kontaktfläche des Mischkneters, kann sich das Kondensat als Film über die gesamte Oberfläche des Produktes verteilen und so zu einer effizienten und homogenen Kühlwirkung beitragen. Der über die gesamte Prozessraumlänge offene Gasraum des Mischkneters erlaubt die Verdampfung des(r) Monomers (en) und die gezielte Rückführung des Kondensats, vorzugsweise in den Feedbereich und/oder den Bereich mit hoher Reaktivität.

Die optimale Verarbeitungstemperatur wird je nach Produkt durch eine Anpassung des im Mischkneter herrschenden Betriebsdrucks eingestellt.

Bei einem weiteren Ausführungsbeispiel des Verfahrens, welches besonders wirkungsvoll im Zusammenhang mit dem eben beschriebenen Verfahren durchgeführt werden kann, soll die Rückmischung des Produktes bis zum Erreichen einer vorbestimmten Viskosität des Produktes erfolgen und diese Viskosität durch kontinuierliche Zugabe von weiterem Monomer und/oder Katalysatoren und/oder Initiatoren aufrecht erhalten werden.

Eine geringe Viskosität zeigt dem Betreiber eines entsprechenden Mischkneters, dass nur oder im wesentlichen Monomer im Mischkneter sich befindet, welches dünnflüssig/niederviskos ist. Je mehr die Polymerisation fortschreitet, um so mehr nimmt die Viskosität der Reaktionsmasse zu. Wird eine vorbestimmte Viskosität des Produktes erreicht, ist dies ein Signal dafür, dass ein bestimmter Prozentsatz des Produktes sich nunmehr in Polymer umgewandelt hat. Dies ist ein Signal, den Mischkneter im kontinuierlichen Verfahren zu betreiben und zwar in der Art, dass die Viskosität und damit der Umsatz bzw. Grad der Polymerisation gleich bleiben. Im wesentlichen wird dies anhand des Kneterwellendrehmomentes, welches bei konstantem Mischkneter-Füllgrad eine Funktion der Viskosität der Reaktionsmasse ist, und/oder des Produkttemperaturprofils über die Prozessraumlänge des Mischkneters bestimmt.

### Beispiel 1:

PLA (Polylacticacid) kann zum Beispiel im Mischkneter in einem optimalen Verarbeitungstemperaturbereich von 175 bis 190° C, unter inerter Atmosphäre, leichtem Überdruck an Stickstoff oder einem Betriebsvakuum von 40 - 100 mbar abs. durch Zugabe des Monomeren Lactid und der Katalysatorlösung über eine sogenannte "Ring-opening"-Polymerisation hergestellt werden.

Unterhalb diesem optimalen Temperaturbereich erhöht sich die Viskosität des gebildeten PLA drastisch, wodurch das Kneterwellendrehmoment stark ansteigt und zunehmend mechanische Knetwärme in die Reaktionsmasse dissipiert wird. Oberhalb des optimalen Temperaturbereichs besteht eine mit Temperatur und Verweilzeit zunehmende Gefahr der thermischen Produktschädigung und/oder der Depolymerisation.

Eine Betriebsweise unter leichtem Stickstoff-Überdruck hat den Vorteil des Ausschlusses der Möglichkeit des unkontrollierten Eintrags von für das Reaktionssystem schädlichem Luftsauerstoff oder Luftfeuchtigkeit; die Betriebsweise unter Vakuum hat den Vorteil der höheren Kühlwirkung durch verstärkte Verdampfungstätigkeit.

Der Monomerstrom Lactid (und die darin in kleinsten Mengen mikrovermischte Katalysatorlösung) wird in geschmolzenem Zustand bei Temperaturen oberhalb 115 °C dem Mischkneter kontinuierlich zugeführt. Die Mikrovermischung des geschmolzenen Lactidstroms mit der Katalysatorlösung erfolgt üblicherweise anhand von statischen Mischern oder von "Tube in Tube - Mischern", kurz vor Eintritt in den Mischkneter. Die Mikrovermischung ist eine Voraussetzung für optimale Reaktivität und homogene Produktqualität, sowie für eine stabile Prozessführung. Der mikrovermischte Zustrom wird umgehend in die im Mischkneter vorliegende, bereits im Feedbereich teilkonvertierte, höherviskose Reaktionsmasse eingemischt, bei üblichen Produkttemperaturen um 175-180°C. Der Zustrom findet somit von Anfang an im Mischkneter ideale Bedingungen und Reaktionstemperaturen oberhalb 140°C, die einen spontanen Reaktionsstart und eine raschestmögliche Umsetzung zu PLA erlauben.

Die Exothermie der Polymerisationsreaktion sowie die in Wärme dissipierte mechanische Knetenergie decken die Erwärmung des Feedstroms. Überschüssige Wärme wird über die Verdampfungskühlung (Verdampfung und Rückflusskondensation des Monomers Lactid) wirksam abgeführt, um die Energiebilanz auszugleichen. Der Wärmeübergang zum Produkt über die mit ca. 175-190°C heissem Wärmeträgeröl oder Dampf beheizten Kontaktflächen des Mischkneters ist in der Energiebilanz wegen der geringen Temperaturunterschiede von Produkt/Reaktionsmasse und Heizmedium vernachlässigbar. Der Wärmeübergang ist nur während Anfahrphasen von Bedeutung, solange wegen zu niedriger Viskositäten die erforderliche Prozesswärme über die mechanische Kneterleistung nicht eingebracht werden kann.

Das Produkttemperaturprofil im Mischkneter lässt sich in Abhängigkeit von frei wählbaren Parametern wie Betriebsdruck, Rührwellendrehzahl, Füllgrad und Produkt-Durchsatz (Monomer und Katalysatorlösung) idealerweise auf Werte von 175-180°C am Eintrag und 180-190° am Austrag einstellen. Dieses ansteigende Produkttemperaturprofil spiegelt steigende Viskosität und steigenden Umsatz zu PLA im Mischkneter zum Austrag hin wieder. Dies macht deutlich, dass es sich beim Mischkneter nicht um ein ideal rückgemischtes System handelt, sondern dass das Verhalten der einer Rührkesselkaskade mit ca. 3 - 5 hintereinander geschalteten Rührkesseln entspricht.

Die Umsetzungsraten erreichen bis zu ca. 90 - 96% PLA bei enger Molmassenverteilung (Polydispersität ca. 2). Die erforderlichen Verweilzeiten im Mischkneter betragen je nach gewünschter Molmasse und Katalysatorlösung/- konzentration 20 bis 50 min.

### Beispiel 2:

Gleiche Vorrichtung und Prozessführung mit entsprechend angepassten Parametern bietet sich auch im Falle der Herstellung von PLA aus dem Monomeren Lactic Acid (Milchsäure) über die Polykondensationsreaktion an.

Durch dieses erfindungsgemässe Verfahren wird der Vorteil erreicht, auch hohe bis sehr hohe Schmelzviskositäten effizient und sicher verarbeitet werden können, und damit zum Beispiel im Falle von Polymerreaktionen hohe Umsatzraten in einem Schritt und in einem einzigen Mischkneter erzielen zu können. Während des Prozesses mit viskosen Massen werden eventuell auftretende Phänomene, wie extreme Schaumbildung und/oder extremes Aufblähen der viskosen Produktmasse, über sehr gute Grenzflächenerneuerungsraten im Mischkneter wirksam unterdrückt.

Im Mischkneter lassen sich neben Polymerreaktionen auch die Eindampfung von Polymerlösungen effizient durchführen. Die zur Ausdampfung grosser Mengen an Lösemitteln benötigte Verdampfungsenergie wird dementsprechend durch die Kombination von Kontaktwärme und vor allem hoher mechanisch dissipierter Kneterwärme (Scherung) maximiert. Die Möglichkeit, über die Verdampfung von Lösungsmittel oder Monomeren die Produkttemperatur konstant zu halten bzw. nach oben hin zu begrenzen, erlaubt einen hohen Freiheitsgrad in Bezug auf die Regulierung der mechanische Kneterwärme über die Drehzahl (Schergefälle) und den Füllgrad des Mischkneters.

Sollte in einem bevorzugten Ausführungsbeispiel ein zweiter Mischkneter, Extruder, Flashpott od. dgl. nachgeordnet sein, so findet in diesem auch ein Entgasen oder Demonomerisieren / Devolatilisieren statt. Beispielsweise kann in einem derartigen zweiten Mischkneter oder Extruder das Produkt durch eine entsprechende Geometrie der Knetelemente einer Pfropfenströmung unterworfen werden. In diesem zweiten Prozessschritt findet eine Rest-Eindampfung, die oft stoffübergangslimitiert ist, zu sehr tiefen Restgehalten an Lösemitteln und/oder Monomeren statt, weshalb hier bevorzugt zweiwellige Mischkneter verwendet werden, die im Stand der Technik beschrieben sind. Flashpotte können sich speziell für Produkte eignen, bei denen die Entgasung oder das Demonomerisieren / Devolatilisieren spontan und rasch abläuft und die - noch - eine genügende Fliessfähigkeit aufweisen, um zum Beispiel eine darunterliegende Zahnradpumpe für eine nachfolgende Granulation zu speisen.

Für Mischkneter mit Pfropfenströmungseigenschaft ist wesentlich, dass die Oberfläche / Grenzfläche des Produktes möglichst schnell erneuert wird, da von dieser Oberfläche die Flüssigkeit abdampft. Da sich die Verdunstungsstellen mehr und mehr in das Gutsinnere zurückziehen, muss die Produktoberfläche durch intensiveres Kneten permanent erneuert werden. Ferner ist eine gute Produkttemperaturkontrolle notwendig.

Dem Anliegen der Schaffung grösstmöglicher Produkt- / Gas - Grenzflächen kann vor allem auch dadurch Rechnung getragen werden, dass das Produkt vor dem Eintritt in den zweiten Mischkneter / Extruder / Flashpott aufgeteilt bzw. zerkleinert wird, was beispielsweise ein entsprechendes Lochblech oder eine Düse mit hoher Anzahl an Düsenlöchern bewerkstelligt. Wird das Produkt nach dem Austrag aus dem ersten Mischkneter mittels beispielsweise einer Zahnradpumpe durch eine Lochplatte gedrückt, so gelangt es in Strängen (spaghettiförmig) in den zweiten Mischkneter / Extruder / Flashpott. Vorzugsweise werden der zweite Mischkneter/ Extruder/ Flashpott unter tiefem Vakuum und maximaler Produkttemperatur gefahren.

Der Austrag der viskosen Polymermasse wird mittels einer am Mischkneter integrierten, horizontal oder vertikal positionierten Doppelschnecke mit Zwangsförderung bewerkstelligt. Diese wiederum speist eine direkt nachgeschaltete Zahnradpumpe, deren Drehzahl derart geregelt werden kann, dass der Füllgrad und damit die Produkteverweilzeit im Mischkneter konstant bleiben. Die Produktzufuhr zur Zahnradpumpe erfolgt unter konstant gehaltenem Speisedruck über eine Drehzahlregelung der Doppelschnecke.

Als Regelgrösse für die Drehzahlregelung der Zahnradpumpe dient das Drehmoment der Mischkneterwelle.

### Beispiel 3:

Zur Demonomerisierung der im ersten Mischkneter gebildeten PLA Masse mit einem Restgehalt von 4 - 10 % monomerem Lactid, wird diese Masse mittels Zahnradpumpen über Lochplatten und/oder adequat ausgebildete Düsen einem zweiten Mischkneter / Extruder / Flashpott zugeführt, der idealerweise unter Vakuum von < 50 - 10 mbar abs., oder noch besser unter hohem Vakuum < 10 - 0,5 mbar abs. betrieben wird. Dies idealerweise bei einer maximal zulässigen Produkttemperatur von 190 - 210 °C. Die Verweilzeit ist so hun wie möglich zu halten, um Produkt Schädigung und/oder "Chemische Nach bildung" von Monomeren Lactid zu Vermeiden.

Weitere Vorteile, Merkmale und Einzelheiten der Erfindung ergeben sich aus der nachfolgenden Beschreibung eines bevorzugten Ausführungsbeispiels einer erfindungsgemässen Anlage zum Behandeln von viskosen Produkten, insbesondere zur Durchführung von Polymerisationsreaktionen und anschliessenden Entgasungs-, Demonomerisierungs- oder Devolatilisierungsprozessen.

In einen einwelligen oder zweiwelligen, von einem Heizmantel umgebenen Mischkneter mit rückmischender Rührwellengeometrie, welcher mit teilreagiertem Produkt gefüllt ist, werden kontinuierlich Monomer(e), Katalysatoren, Initiatoren und eventuell kleine Mengen an Lösemittel über entsprechende Dosiereinrichtungen kontinuierlich eingetragen und im Prozessraum rückgemischt. Der Mischkneter ist nicht ideal rückgemischt, sondern weist in der Praxis ein Verhalten auf, das der einer Rührkesselkaskade mit 2 bis 5, typischerweise mit 3 bis 4 hintereinander geschalteten Rührkesseln entspricht. Dieses Verhalten deckt sich gut mit der Anzahl / Unterteilung an Kammern, die durch die auf der Welle (den Wellen) angebrachten Scheiben / Scheibenelementen / Scheibensegmenten gebildet werden. Statische Knetgegenelemente im Falle einwelliger Mischkneter, bzw. die auf den Scheiben angebrachten dynamische Knetbarrenelemente greifen ineinander und bewirken eine intensive Mischung und Knetung viskoser Massen. Dabei ist unter dem Begriff "Kammer" kein geschlossener Raum zu verstehen, sondern offene miteinander kommunizierende Zellen.

Die Viskosität der Reaktionsmasse in dem Mischkneter wird durch die Wahl des Reaktionssystems, der Katalysatorkonzentration, des Durchsatzes, der Temperatur oder des Drucks so eingestellt, dass das Produkt in einem nachfolgenden, zweiten Mischkneter / Extruder / Flashpott direkt entgast / demonomerisiert / devolatilisiert wird, oder das unreagierte Monomer in einer nachfolgenden Apparatur, zum Beispiel einem Reifungstank, ausreagiert werden kann.

Verarbeitungstemperatur und Betriebsdruck im Mischkneter werden vorzugsweise so gewählt, dass sich Produktviskositäten einstellen, die einen begrenzten mechanischen Wärmeeintrag erlauben und/oder dass der Monomerüberschuss respektive der Lösungsmittelanteil sich im Siedebereich befindet. Der entsprechende Temperaturbereich hängt vom Polymer selbst ab.

Mit diesem eben beschriebenen Verfahren ist es möglich, die Reaktionswärme und die dissipierte Knetenergie durch das Verdampfen des Lösemittels/Monomers abzuführen. Dieser Dampf wird in einem auf dem Mischkneter direkt aufgesetzten Rückflusskondensator kondensiert und in die Reaktionsmasse zurückgegeben. Mehrere Rückflusskondensatoren können auch auf der Länge des Mischkneters verteilt werden. Insbesondere ist es denkbar, dass jeder Kammer ein Rückflusskondensator zugeordnet wird. Die Kondensation kann im übrigen auch extern realisiert werden, und das Kondensat kann dann gezielt an bestimmten Stellen, vorzugsweise im Eintrags- und Mittelbereich des Mischkneters mit verschiedenen Düsen zurück auf die Reaktionsmasse aufdosiert werden. Durch das kleine UD (Längen/Durchmesser)-Verhältnis von bevorzugt 0,5 bis 3,5 des Mischkneters wird das rückfliessende Kondensat auch ohne gezielte Rückführung optimal gleichmässig im Reaktor zurückgemischt, was bei bisher verwendeten rückmischenden Extrudern mit einem grossen UD-Verhältnis ein grosses Problem darstellt.

Der rückgemischte Mischkneter kann unter Vakuum, atmosphärisch oder unter Druck fahren. Für Polymerisationssysteme, welche mit Vakuum betrieben werden, wird ein Ventil geöffnet und die Leitung an eine Vakuumpumpe angeschlossen. Auf diesem Wege werden Leckgasströme und Inertgasbeschleierungen abgezogen, das Monomer kondensiert jedoch fast vollständig im Rückflusskondensator und wird der Reaktionsmasse im Mischkneter zurückgeführt. Für Polymerisationssysteme, welche atmosphärisch betrieben werden, wird das Ventil geöffnet und die Leitung unter diesen atmosphärischen Bedingungen belassen.

Für Polymerisationssysteme, welche mit Drücken höher als Umgebungsdruck betrieben werden, wird bevorzugt mit einem Inertgas (z.B. Stickstoff) der Systemdruck auf einen bestimmten Wert geregelt, was mittels eines Ventils geschieht. Das Ventil ist in diesem Fall geschlossen.

### Beispiel 4:

Bei PLA liegt die optimale Verarbeitungstemperaturbereich für die Polymerisationsreaktion bei 175 - 190°C, wobei je nach gewünschter Molmasse des PLA und je nach Produkttemperaturprofil das spezifische Kneterwellendrehmoment zwischen 20 - 45 Nm / Liter Prozessraum-Totalvolumen bei einem Füllgrad von ca. 70% beträgt.

Der Betriebsdruck kann dabei entsprechend frei angepasst werden, so dass die Verdampfungstätigkeit des Monomeren Lactid (Verdampfungskühlung mit Rückflusskondensation) dem höheren oder niedrigeren mechanischen Knetwärmeeintrag Rechnung trägt.

Der Rückflusskondensator wird vorzugsweise mit einem Heizmedium von 110 - 140° beheizt, bei Temperaturen, die eine möglischst vollständige Kondensation der Lactiddämpfe an den Austauschflächen erlauben, die aber immer noch deutlich über der Erstarrungstemperatur (bzw. Schmelztemperatur) des Monomers Lactid liegen und damit einen flüssigen Rückfluss garantieren.

Das Reaktionsprodukt /Die viskose Masse wird am Austragsende des Mischkneters mittels einer integrierten Austragseinrichtung, eine sogenannte Austrags-Doppelschnecke mit Zwangsförderung, die vertikal aber auch horizontal positioniert sein kann, abgezogen. Diese wiederum speist eine direkt nachgeschaltete Zahnradpumpe, deren Drehzahl derart geregelt werden kann, dass der Füllgrad und damit die Produkteverweilzeit im Mischkneter konstant bleiben. Ein konstant geregelter Mischkneter-Füllgrad ist neben dem durch die Dosierorgane vorgegebenen konstanten kontinuierlichen Durchsatz eine absolute Notwendigkeit, um die Prozessstabilität und gleichmässige Produkteigenschaften gewährleisten zu können. Als Regelgrösse für die Drehzahlregelung der Zahnradpumpe dient eine geeignete Messeinrichtung für den Füllgrad, zum Beispiel das Drehmoment an der Mischkneterwelle, das Gewicht des Mischkneter- Produkteinhalts (hold-up) oder die radiometrische Füllgradsmessung. Die Produktzufuhr zur Zahnradpumpe erfolgt unter konstant gehaltenem Speisedruck über eine Drehzahlregelung der Doppelschnecke.

Auf die Zahnradpumpe folgt eine Lochplatte oder Düsenplatte, durch welche Produkt aus der Austragseinrichtung spaghettiartig in den zweiten Mischkneter / Extruder / Flashpott eingebracht werden kann. Ein Pfeil zwischen Zahnradpumpe und Lochplatte bzw. Düsenplatte deutet an, dass in diesem Bereich auch gasförmige oder flüssige Strippmittel zur nachfolgenden Entgasungsunterstützung oder Additive, zum Beispiel Reaktionsstopper oder Stabilisatoren, zugegeben werden können. Strippmittel bewirken bei Eintritt in den zweiten Mischkneter / Extruder / Flashpott ein Aufplatzen, Aufreissen der Produktoberflächen und somit einen verbesserten Stoffübergang.

Dem zweiten Mischkneter / Extruder ist ein Motor zugeordnet, über den eine oder mehrere Rührwelle/n mit Rühr-/Knetelementen angetrieben werden. Die Rührwellengeometrie ist so ausgestaltet, dass eine Pfropfenströmung mit engem Verweilzeitspektrum (entsprechend 10-16 hintereinandergeschalteten Rührkesseln) oder auch eine mehr oder minder ausgeprägte Rückmischung (entsprechend 2 bis 5 hintereinandergeschalteten Rührkesseln) resultiert. Ferner sind dem Mischkneter / Extruder ein oder mehrere Brüdendom(e) aufgesetzt, über den/die zu verdampfenden Produkte (Monomere, Lösemittel, Strippmittel) abgezogen werden können.

An den Mischkneter / Extruder schliesst analog zum Mischkneter eine weitere Austragsschnecke und eine Zahnradpumpe an, die den notwendigen Druck für die Granulation des Endprodukts liefern kann.

## Patentansprüche

1. Verfahren zur Homo- oder Copolymerisation von Milchsäure (PA), wobei Milchsäure und Katalysatoren mikrovermischt und einer teilkonvertierten, höherviskosen Reaktionsmasse in einem rückgemischten Mischkneter mit einem Längen/Durchmesserverhältnis von 0,5 - 3,5 bei einer Temperatur von 175-180°C zugegeben werden und dem Produkt Wärme zugeführt und mit bereits reagiertem Produkt rückgemischt und das reagierte Produkt aus dem Mischkneter bei einer Temperatur von 180-190°C abgeführt wird, wobei Teile des Produktes verdampft werden und damit eine Exothermie des Produktes und überschüssiger mechanischer Wärmeeintrag durch Verdampfungskühlung absorbiert wird.

2. Verfahren nach Anspruch 1, **dadurch gekennzeichnet, dass** die verdampften Teile des Produktes vollständig oder zumindest teilweise kondensiert und als Kondensat wieder in den Mischkneter zur Kühlung des übrigen Produktes zurückgeführt werden.

3. Verfahren nach Anspruch 2, **dadurch gekennzeichnet, dass** die Rückführung in den Mischkneter an der Stelle erfolgt, an der auch die Haupt-Verdampfung erfolgt ist.

4. Verfahren nach wenigstens einem der Ansprüche 1 bis 3, **dadurch gekennzeichnet, dass** die Verarbeitungstemperatur durch Veränderung des Druckes in dem Mischkneter auf einen vorbestimmten Wert eingestellt wird.

5. Verfahren nach wenigstens einem der Ansprüche 1 bis 4, **dadurch gekennzeichnet, dass** zum Abziehen von Dämpfen in dem Mischkneter ein Vakuum aufgebaut wird.

6. Verfahren nach wenigstens einem der Ansprüche 1 bis 5, **dadurch gekennzeichnet, dass** die Rückmischung bis zum Erreichen einer vorbestimmten Viskosität des Produktes erfolgt und diese Viskosität durch kontinuierliche Zugabe von weiterem Monomer und/oder Katalysatoren und/oder Initiatoren aufrechterhalten wird.

7. Verfahren nach wenigstens einem der Ansprüche 1 bis 6, **dadurch gekennzeichnet, dass** das Produkt durch Energieeintrag bestehend aus mechanischer Knetenergie und/oder Wärmeübertragung über den Kontakt mit Kneterwärmeaustauschflächen bis nahe oberhalb der Einbruchstelle der Verdampfungsgeschwindigkeit verdampft wird und in das so voreingedampfte viskose Produktbett kontinuierlich neue niedrigviskose Produktlösung derart eingemischt wird, dass die Verdampfungsgeschwindigkeit oberhalb der Einbruchstelle bleibt.

8. Verfahren nach Anspruch 7, **dadurch gekennzeichnet, dass** eine Knetenergie durch Veränderung der Drehzahl und/oder des Füllgrades des Mischkneters beeinflusst wird.

9. Verfahren nach wenigstens einem der Ansprüche 1 bis 8, **dadurch gekennzeichnet, dass** das Produkt in dem Mischkneter kontinuierlich rückgemischt wird.

10. Verfahren nach wenigstens einem der Ansprüche 1 bis 9, **dadurch gekennzeichnet, dass** das Produkt kontinuierlich aus dem Mischkneter ausgetragen und in einen zweiten Mischkneter oder Extruder oder Flashpott eingegeben wird.

11. Verfahren nach Anspruch 10, **dadurch gekennzeichnet, dass** das Produkt beim Austragen aus dem Mischkneter aufgeheizt wird, bevor es in den zweiten Mischkneter oder Extruder oder Flashpott gelangt.

12. Verfahren nach Anspruch 10 oder 11, **dadurch gekennzeichnet, dass** das Produkt in dem zweiten Mischkneter oder Extruder einer Pfropfenströmung oder einer Rückmischung unterworfen wird.

13. Verfahren nach Anspruch 12, **dadurch gekennzeichnet, dass** das Produkt in dem Mischkneter oder Extruder einer grossen Oberflächenerneuerung sowie guter Produkttemperaturkontrolle unterworfen wird.

14. Verfahren nach wenigstens einem der Ansprüche 10-13, **dadurch gekennzeichnet, dass** zwischen dem ersten und dem zweiten Mischkneter nach einer Zahnradpumpe und vor einer Zerkleinerungseinrichtung ein Strippmittel oder Additive zugeführt wird.

15. Verfahren nach Anspruch 14, **dadurch gekennzeichnet, dass** das Strippmittel Wasser oder Stickstoff ist.

## Claims

1. A method for the homopolymerisation or copolymerisation of lactic acid, Wherein lactic acid and catalysts are micro-mixed and added to a partially convened, higher-viscosity reaction mass in a back-mixed kneader-mixer with a ratio of length to diameter of 0.5 - 3.5, at a temperature of 175-180°C, and heat is supplied to the product and back-mixing with already reacted product occurs and the reacted product is removed from the kneader-mixer at a temperature of 180-190°C, with portions of the product being evaporated and hence exothermicity of the product and excess mechanical introduction of heat being absorbed by evaporative cooling.

2. A method according to Claim 1, **characterised in that** the evaporated portions of the product are fully or at least partially condensed and are returned into the kneader-mixer as condensate to cool the rest of the product.

3. A method according to Claim 2, **characterised in that** the returning into the kneader-mixer takes place at the point at which the main evaporation has also taken place.

4. A method according to at least one of Claims 1 to 3, **characterised in that** the processing temperature is set to a predetermined value by changing the pressure in the kneader-mixer.

5. A method according to at least one of Claims 1 to 4, **characterised in that** a vacuum is built up in the kneader-mixer in order to draw off vapours.

6. A method according to at least one of Claims 1 to 5, **characterised in that** the back-mixing takes place until a predetermined viscosity of the product is reached, and this viscosity is maintained by continuous addition of further monomer and/or catalysts and/or initiators.

7. A method according to at least one of Claims 1 to 6, **characterised in that** the product is evaporated by introduction of energy consisting of mechanical kneading energy and/or heat transfer via the contact with kneader heat-exchange surfaces up to just above the point of collapse of the evaporation rate, and new low-viscosity product solution is mixed continuously into the viscous product bed thus pre-evaporated such that the evaporation rate remains above the point of collapse.

8. A method according to Claim 7, **characterised in that** any kneading energy is influenced by changing the speed and/or the degree of filling of the kneader-mixer.

9. A method according to at least one of Claims 1 to 8, **characterised in that** the product is continuously back-mixed in the kneader-mixer.

10. A method according to at least one of Claims 1 to 9, **characterised in that** the product is discharged continuously from the kneader-mixer and is introduced into a second kneader-mixer or extruder or flash pot.

11. A method according to Claim 10, **characterised in that** the product, upon being discharged from the kneader-mixer, is heated before it arrives in the second kneader-mixer or extruder or flash pot.

12. A method according to Claim 10 or 11, **characterised in that** the product is subjected to a plug flow or back-mixing in the second kneader-mixer or extruder.

13. A method according to Claim 12, **characterised in that** the product is subjected to substantial surface renewal and good product temperature control in the kneader-mixer or extruder.

14. A method according to at least one of Claims 10-13, **characterised in that** a stripping medium or additive is supplied between the first and the second kneader-mixer after a gear pump and before a comminution means.

15. A method according to Claim 14, **characterised in that** the stripping medium is water or nitrogen.

## Revendications

1. Procédé d'homopolymérisation ou de copolymérisation d'acide lactique, dans lequel l'acide lactique et des catalyseurs sont micromélangés et ajoutés à une masse réactionnelle à haute viscosité, partiellement convertie, dans un mélangeur-pétrisseur à mélange rétroactif avec un rapport longueur/diamètre de 0,5 à 3,5 à une température de 175 à 180 °C et le produit reçoit un apport de chaleur et est rétromélangé avec du produit déjà réagi et le produit réagi est évacué du mélangeur-pétrisseur à une température de 180 à 190 °C. des parties du produit étant évaporées et une exothermie du produit et un apport de chaleur mécanique excédentaire étant ainsi absorbés par refroidissement par évaporation.

2. Procédé selon la revendication 1, **caractérisé en ce que** les parties évaporées du produit sont entièrement ou du moins partiellement condensées et retournées sous forme de condensat vers le mélangeur-pétrisseur pour refroidir le produit restant.

3. Procédé selon la revendication 2, **caractérisé en ce que** le retour vers le mélangeur-pétrisseur a lieu à l'endroit où a eu lieu également l'évaporation principale.

4. Procédé selon au moins une des revendications 1 à 3, **caractérisé en ce que** la température de mise en oeuvre est réglée à une valeur prédéterminée par variation de la pression dans le mélangeur-pétrisseur.

5. Procédé selon au moins une des revendications 1 à 4, **caractérisé en ce qu'**un vide est créé dans le mélangeur-pétrisseur pour l'extraction de vapeurs.

6. Procédé selon au moins une des revendications 1 à 5, **caractérisé en ce que** le rétromélange a lieu jusqu'à atteindre une viscosité prédéterminée du produit et cette viscosité est maintenue par addition en continu d'un autre monomère et/ou d'autres catalyseurs et/ou initiateurs.

7. Procédé selon au moins une des revendications 1 à 6, **caractérisé en ce que** le produit est évaporé par apport d'énergie composée d'énergie de pétrissage mécanique et/ou de transfert de chaleur via le contact avec des surfaces d'échange thermique du pétrisseur jusqu'à peu près au-dessus du point de rupture de la vitesse d'évaporation et qu'au lit de produit visqueux ainsi pré-évaporé est mélangée en continu une nouvelle solution de produit à faible viscosité de sorte que la vitesse d'évaporation reste au-dessus du point de rupture.

8. Procédé selon la revendication 7, **caractérisé en ce qu'**une énergie de pétrissage est influencée par variation de la vitesse de rotation et/ou du degré de remplissage du mélangeur-pétrisseur.

9. Procédé selon au moins une des revendications 1 à 8, **caractérisé en ce que** le produit est rétromélangé en continu dans le mélangeur-pétrisseur.

10. Procédé selon au moins une des revendications 1 à 9, **caractérisé en ce que** le produit est évacué en continu du mélangeur-pétrisseur et introduit dans un deuxième mélangeur-pétrisseur ou une extrudeuse ou un flash-pot.

11. Procédé selon la revendication 10, **caractérisé en ce que** le produit est chauffé lors de sa sortie du mélangeur-pétrisseur, avant qu'il n'arrive dans le deuxième mélangeur-pétrisseur ou l'extrudeuse ou le flash-pot.

12. Procédé selon la revendication 10 ou 11, **caractérisé en ce que** le produit est soumis dans le deuxième mélangeur-pétrisseur ou l'extrudeuse à un écoulement piston ou à un rétromélange.

13. Procédé selon la revendication 12, **caractérisé en ce que** le produit est soumis dans le mélangeur-pétrisseur ou l'extrudeuse à un grand renouvellement de surface ainsi qu'à un contrôle de bonne température de produit.

14. Procédé selon au moins une des revendications 10 à 13, **caractérisé en ce qu'**un agent de strippage ou additif est alimenté entre le premier et le deuxième mélangeur-pétrisseur après une pompe à roue dentée et avant un dispositif broyeur.

15. Procédé selon la revendication 14, **caractérisé en ce que** l'agent de strippage est de l'eau ou de l'azote.
